# EUROPEAN PATENT APPLICATION

(11) **EP 3 945 216 A1**
(43) Date of publication of application: **02.02.2022**
(21) Application number: 21187650.3
(22) Date of filing: 26.07.2021
(51) Int. Cl.: F04D 17/06, F04D 25/06, F04D 29/62, F04D 29/64

(54) **MIXED FLOW FAN MODULE AND PORTABLE AIR PURIFIER WITH MIXED FLOW FAN MODULE**

(30) Priority: 27.07.2020 KR 20200093403; 14.12.2020 KR 20200174530
(71) Applicant: LG Electronics Inc., Seoul 07336 (KR)
(72) Inventor: OH, Si Young, Seoul (KR); KIM, Juhyun, Seoul (KR); KIM, Kidong, Seoul (KR); CHOI, Seok-Ho, Seoul (KR)
(74) Representative: Vossius & Partner Patentanwälte Rechtsanwälte mbB

(57) **Abstract**

Provided are a mixed flow fan module and a portable air purifier including the mixed flow fan module. According to the present disclosure, the mixed flow fan module includes a fan housing having an outer surface that is curved along a circumferential direction and defining an operation space, a fan member rotatably disposed inside the fan housing, and a fan base coupled to the fan housing and configured to guide air introduction toward the fan member.

## Description

### BACKGROUND

### Technical Field

The present disclosure relates to a mixed flow fan module and a portable air purifier including the mixed flow fan module, and one particular implementation relates to a mixed flow fan module and a portable air purifier including the mixed flow fan module capable of achieving an excellent performance of airflow in a vertical and axial direction.

### Description of Related Art

An air purifier may be widely used in modern life and purify air by filtering physical particles such as dust, fine dust, and ultrafine dust, chemical substances such as odor particles and harmful gases, and microorganisms such as bacteria and viruses.

Air purifiers are becoming essential apparatuses even in general homes owing to an influence of urbanization, industrialization, and internationalization. In addition, the demand of the air purifier is rapidly increasing owing to an increase in fine dust and allergic patients, and an improvement in the standard of living.

The air purifier may have a large size such that the air purifier is used for an environment with an area exceeding 100 m² such as general home. A filter to filter the physical particles such as the dust, a filter to filter the chemical substances such as gas, and a filter to filter the microorganisms such as the bacterial viruses may be used for the air purifier in combination. That is, the air purifier having the large size may be used in a large space such that the air purifier accommodates various types of filters in combination.

However, using the large-sized air purifier in a small space such as one room and an interior of a vehicle may be inefficient in terms of space utilization, mobility, and energy consumption. In addition, the small-sized air purifier may be more suitable for frequently moving users instead of the large-sized air purifier and the air purifier that may be portably used by individuals may also be more suitable for the frequently moving users. Under the background, portable air purifiers that may be portably used by individuals are being developed.

The portable air purifier has the small size and a light weight such that the user easily carries the portable air purifier. The user may easily use the portable air purifier in a desired place while easily carrying the portable air purifier by the user. That is, the portable air purifier may be suitable for users having a life pattern of frequently going out and moving several places rather than staying in one place such as at home for a long period of time.

In the related art document (Korean Patent Publication No. 2020-0037187), an air purifier suctions air from a rear surface thereof and discharges the air to a front thereof. However, the portable air purifier in the related art flows air horizontally and fails to properly deliver purified air to the user.

In addition, when a housing defining a vertical air flow path is used to deliver the purified air to the user, an additional fan module defining a flow path of air moving from a lower side to an upper side along the housing is not provided. In this case, air cleaning efficiency is decreased. Therefore, there is a need to improve the efficiency.

### SUMMARY OF THE DISCLOSURE

The invention is specified by the independent claims. Preferred embodiments are defined in the dependent claims.

The present disclosure provides a mixed flow fan module suitable for blowing air upward from downward along housing and a portable air purifier including the mixed flow fan module.

The present disclosure further provides a mixed flow fan module easily blowing purified air to the user located above an air purifier, and a portable air purifier including the mixed flow fan module.

Aspects of the present disclosure are not limited to the objects mentioned above. Further, other aspects of the present disclosure not mentioned may be understood by the following description, and will be more clearly understood by the examples of the present disclosure. It will also be readily apparent that the aspects of the present disclosure may be realized by the means indicated in claims and a combination thereof.

For the mixed flow fan module and the portable air purifier including the mixed flow fan module according to the present disclosure, the mixed flow fan module has a circular outer circumference.

Specifically, the mixed flow fan module has an outer circumference that is curved along a circumferential direction and is accommodated in the cylindrical housing in contact with an inside of the housing, thereby preventing a decrease in blowing capacity thereof and facilitating air blowing to move the air upward from downward along the housing.

In addition, for the mixed flow fan module and the portable air purifier including the mixed flow fan module according to the present disclosure, air passes through the mixed flow fan module and easily reaches the user located above the air purifier.

Specifically, the air is introduced through a lower side of the housing, is discharged upward from the housing by the mixed flow fan module, and easily reaches the user located above the air purifier.

In addition, the mixed flow fan module and the portable air purifier including the mixed flow fan module according to the present disclosure prevent air backflow to an inlet of a fan member.

Specifically, a passage between the fan member and a fan base is narrow and a bell mouth of the fan base surrounds a lower surface of a shroud, thereby reducing or blocking airflow to the inlet of the fan member through an outside of the fan member.

According to an embodiment of the present disclosure, a mixed flow fan module may include a fan housing having an outer surface that is curved along a circumferential direction and defining an operation space; a fan member rotatably disposed inside the fan housing; and a fan base coupled to the fan housing and configured to guide air introduction in a direction toward the fan member.

In addition, the fan housing, the fan member, and the fan base may form a module by coupling to one another.

In addition, the fan housing may include at least one of a supporting plate, a connecting supporter, a wire guide, a side supporter, an inner guide, or a protrusion mounting groove.

In addition, the supporting plate may be disposed at a center of the fan housing.

In addition, a connecting supporter may extend outward from the supporting plate in a radial direction.

In addition, a side supporter may be spaced apart from the supporting plate, may be connected to the connecting supporter, and may have a circular curved surface along an outer circumference thereof.

In addition, a protrusion mounting groove may be defined on a lower surface of the side supporter, may have a concaved shape, and a coupling protrusion of the fan base may be connected to the protrusion mounting groove.

In addition, an inner guide may protrude inward from the side supporter and have a first inclined surface, and an inner diameter of the first inclined surface may be narrowed toward the fan base. In addition, the inner guide may be disposed at a lower portion of the side supporter facing the fan base.

In addition, a wire guide may be disposed on a side surface of the connecting supporter and may be configured to support a lower side of a wire to move the wire along the side surface of the connecting supporter.

In addition, the fan member may include a hub, a fan blade, and a shroud.

In addition, a hub may be disposed at a center of the fan housing and may rotate by receiving external power. In addition, the hub may include at least one of a hub plate, a shaft coupler, an inner protrusion, a skirt, a first reinforcing protrusion, or a second reinforcing protrusion.

In addition, a hub plate may be rotatably disposed inside the fan housing and may be located at a radial central portion of the fan housing.

In addition, a shaft coupler may be disposed at a center of the hub plate, may protrude either upward or downward from the hub plate, and may be connected to a shaft to receive a rotational power.

In addition, a first reinforcing protrusion may be disposed radially around the shaft coupler, may be defined at an outside of the shaft coupler, and may have a band shape.

In addition, an inner protrusion may be defined along an outer edge of the hub plate, may have a circular arc shape, and may extend upward.

In addition, a second reinforcing protrusion may extend in a vertical direction along an inner surface of the inner protrusion, may define a lower portion of the second reinforcing protrusion that is curved toward the shaft coupler and is coupled to the hub plate, and may have a band shape.

In addition, a skirt may extend obliquely upward from an outside of the inner protrusion.

In addition, a plurality of fan blades may have a first end connected to the hub and may be spaced apart from one another by equal distance along an outer circumferential surface of the hub.

In addition, a shroud may be connected to a second end of the fan blade, may have an annular shape, and may be spaced apart from the fan base. In addition, an outer diameter of the hub and an inner diameter of the shroud may each decrease from an upper side thereof to a lower side thereof. In addition, a distance between the shroud and the skirt may be increased from a lower side thereof to an upper side thereof. In addition, when an angle between the shroud and a horizontal line is angle B1 and an angle between the skirt and the horizontal line is angle B2, angle B1 is smaller than angle B2.

In addition, each of a plurality of fan blades connects a skirt to the shroud and extends spirally.

In addition, the shroud may further include an inlet protrusion defined at a lower side of the shroud. The inlet protrusion may have a ring shape, extend downward, and be spaced apart from the fan base by a set distance.

In addition, the fan base may include a base plate having a plate shape, that extends annularly, and defining a hollow at a central portion thereof to move air; and a bell mouth having an annular shape, disposed along an inner side of the base plate facing the hollow, defining a groove concaved upward, and surrounding a lower side of the inlet protrusion.

In addition, the fan base may further include a protruding rib disposed at an outside of the bell mouth in a radial direction, surrounding an outer circumference of the bell mouth, and having an annular shape.

In addition, the protruding rib may include a second inclined surface that is spaced apart from the shroud and an inner diameter of the second inclined surface is increased toward an upper side thereof. In addition, the second inclined surface is arranged in parallel to the shroud. In addition, the first inclined surface and the second inclined surface may have a same angle with a horizontal line.

In addition, a portable air purifier including a mixed flow fan module may have a mixed flow fan module including a fan housing having an outer surface that is curved along a circumferential direction and defining an operation space, a fan member rotatably disposed inside the fan housing, and a fan base coupled to the fan housing and configured to guide air introduction toward the fan member; a housing defining a cylindrical inner flow path in contact with the fan housing and that extends vertically, configured to accommodate the mixed flow fan module, and including an inlet defined at a lower portion of the mixed flow fan module and configured to suction air; and a filter accommodated inside the housing, disposed on at least one of a lower surface or an upper surface of the mixed flow fan module, and configured to purify air.

For the mixed flow fan module and the portable air purifier including the mixed flow fan module according to the present disclosure, the fan housing of the mixed flow fan module has a circular outer side and is accommodated in the cylindrical housing to stably discharge the air vertically, thereby improving air cleaning efficiency.

In addition, according to the present disclosure, the air passes through the mixed flow fan module and easily reaches the user located above the air purifier, thereby improving customer satisfaction.

In addition, according to the present disclosure, the passage between the fan member and the fan base is narrow and the bell mouth of the fan base surrounds the lower surface of the shroud, thereby preventing the air backflow to the inlet of the fan member and improving air blowing efficiency.

A portable air purifier according to another aspect may include the mixed flow fan module described above in any configuration.

For example, a portable air purifier may comprise a mixed flow fan module having a fan housing with an outer surface that is curved along a circumferential direction and defining an operation space, a fan member rotatably disposed inside of the fan housing, and a fan base coupled to the fan housing and configured to guide air toward the fan member. The portable air purifier may further comprise a housing defining an inner flow path in contact with the fan housing and that extends vertically, configured to accommodate the mixed flow fan module, and comprising an inlet defined at a lower portion of the mixed flow fan module and through which air is suctioned, a battery configured to provide power for the mixed flow fan module, a filter accommodated inside of the housing, disposed upstream of the mixed flow fan module, and configured to purify air, and a discharger disposed downstream of the mixed flow fan module and configured to discharge purified air.

Further effects of the present disclosure in addition to the above-mentioned effects are described together while describing specific matters for carrying out the disclosure below.

### BRIEF DESCRIPTION OF THE DRAWINGS

- FIG. 1: is a perspective view of an example mixed flow fan module.
- FIG. 2: is an exploded perspective view of an example mixed flow fan module.
- FIG. 3: is a plan view of an example mixed flow fan module.
- FIG. 4: is a bottom view of an example mixed flow fan module.
- FIG. 5: is a cross-sectional view of an example mixed flow fan module.
- FIG. 6: is a cross-sectional view of an example of air passing through a flow mixed flow fan module.
- FIG. 7: is a perspective view of an example fan housing.
- FIG. 8: is a cross-sectional view of an example fan housing.
- FIG. 9: is a perspective view of an example fan member.
- FIG. 10: is a plan view of an example fan member.
- FIG. 11: is a bottom view of an example fan member.
- FIG. 12: is a front view of an example fan member.
- FIG. 13: is a cross-sectional view of an example fan member.
- FIG. 14: is a perspective view of an example fan base.
- FIG. 15: is a cross-sectional view of an example fan base.
- FIG. 16: is an exploded perspective view of an example portable air purifier including a mixed flow fan module.
- FIG. 17: is a cross-sectional view of an example portable air purifier including a mixed flow fan module.
- FIG. 18: is a front view of an example portable air purifier including a mixed flow fan module.
- FIG. 19: is a cross-sectional view of an example of airflow through a portable air purifier including a mixed flow fan module.

### DETAILED DESCRIPTION OF EXEMPLARY IMPLEMENTATIONS

Some embodiments of the present disclosure are described in detail with reference to accompanying drawings. Therefore, a person having ordinary knowledge in the art to which the present disclosure pertains will be able to easily embody the technical idea of the present disclosure. A detailed description of a well-known technology relating to the present disclosure may be omitted if it unnecessarily obscures the gist of the present disclosure. Hereinafter, one or more embodiments of the present disclosure are described in detail with reference to the accompanying drawings. Same reference numerals may be used to refer to same or similar components.

Terms such as first, second, and the like may be used herein to describe various elements of the present disclosure; however, these elements are not limited by these terms. These terms are intended to distinguish one element from another element. A first element may be a second element unless otherwise stated.

In this document, the terms "upper," "lower," "on," "under," or the like are used such that, where a first component is arranged at "an upper portion" or "a lower portion" of a second component, the first component may be arranged in contact with the upper surface or the lower surface of the second component, or another component may be disposed between the first component and the second component. Similarly, where a first component is arranged on or under a second component, the first component may be arranged directly on or under (in contact with) the second component, or one or more other components may be disposed between the first component and the second component.

Further, the terms "connected," "coupled," or the like are used such that, where a first component is connected or coupled to a second component, the first component may be directly connected or able to be connected to the second component, one or more additional components may be disposed between the first and second components, or the first component may be connected or coupled to the second component by additional components.

Unless otherwise stated, each component may be singular or plural throughout the disclosure.

In some examples, singular expressions used in the present disclosure include plural expressions unless the context clearly indicates otherwise. In the present disclosure, terms such as "including" or "comprising" should not be construed as necessarily including all of the various components, or various steps described in the present disclosure, and terms such as "including" or "comprising" should be construed as not including some elements or some steps or further including additional elements or steps.

In the present disclosure, unless otherwise stated, "A and/or B" means A, B, or both. Unless otherwise stated, "C to D" means "C or more and D or less".

### [Mixed flow fan module]

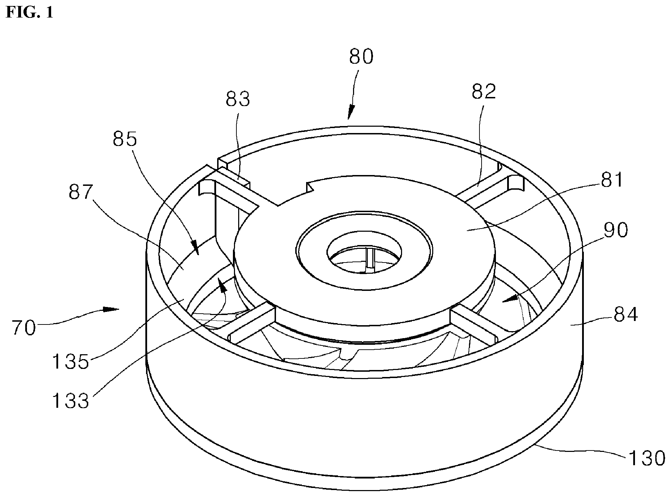

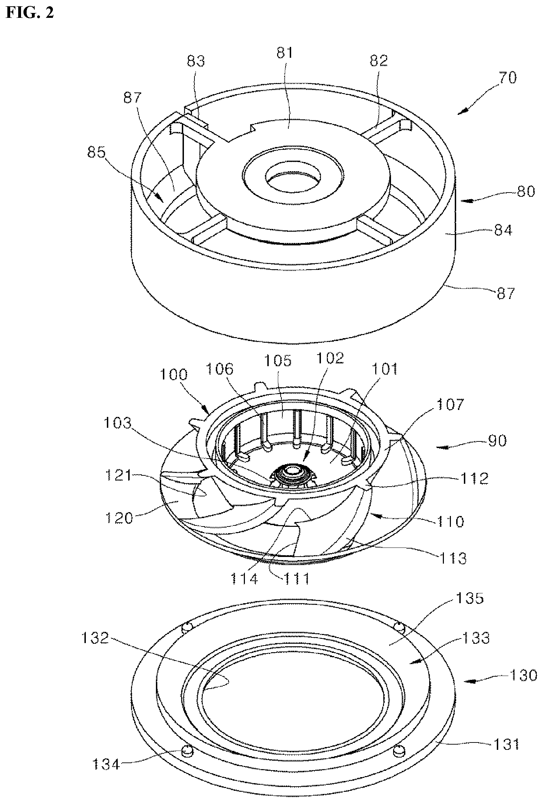

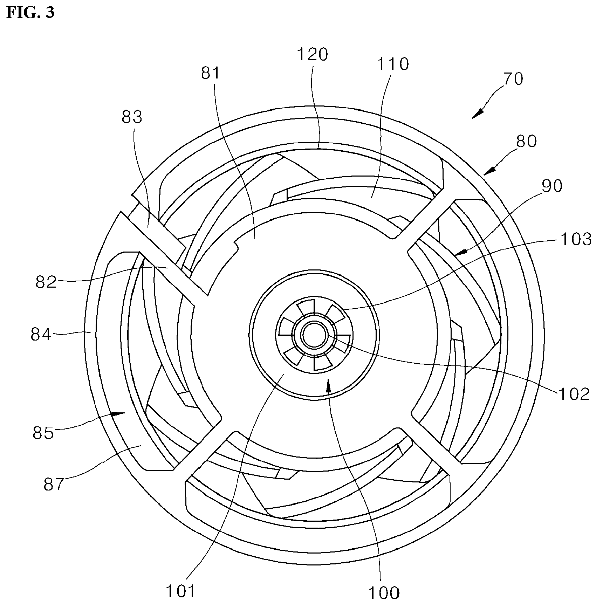

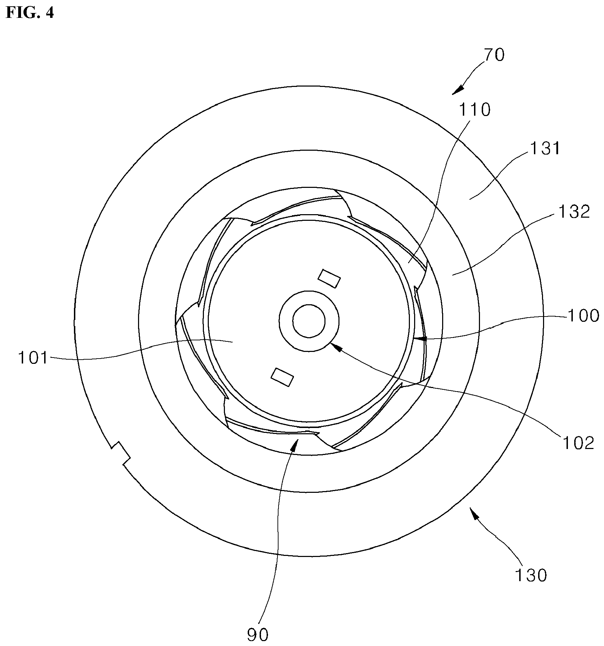

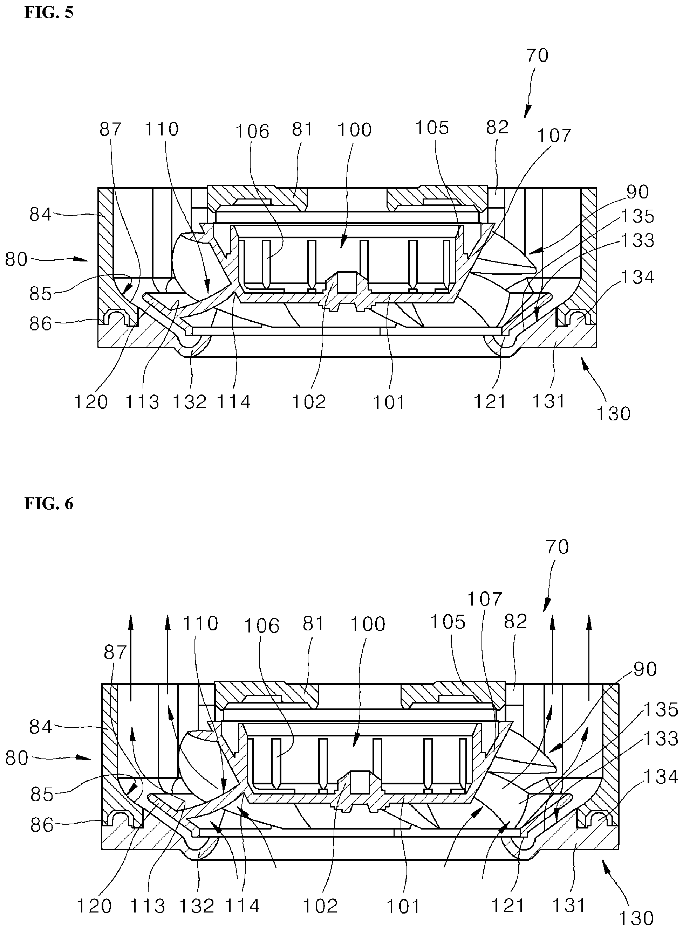

FIG. 1 is a perspective view of an example mixed flow fan module 70. FIG. 2 is an exploded perspective view of an example mixed flow fan module 70. FIG. 3 is a plan view of an example mixed flow fan module 70. FIG. 4 is a bottom view of an example mixed flow fan module 70. FIG. 5 is a cross-sectional view of an example mixed flow fan module 70. FIG. 6 is a cross-sectional view of an example of air passing through a mixed flow fan module 70.

As shown in FIGS. 1 to 6, the mixed flow fan module 70 according to an embodiment of the present disclosure has a circular outer circumference. A fan housing 80 defines an outer side of the mixed flow fan module 70 and has an outer circumference that is curved along a circumferential direction. In addition, the mixed flow fan module 70 having the curved surface that is curved along the circumferential direction is accommodated in a cylindrical housing 10 in contact with an inside of the cylindrical housing 10. Therefore, a decrease in blowing capacity is prevented and the air may be easily blown from a lower side thereof to an upper side thereof along the housing 10.

In addition, various modifications may be made in the technical field which the mixed flow fan module 70 is disposed between an inlet 22 defined at a lower portion of the housing 10 and a discharge outlet 24 defined at an upper portion of the housing 10 and rotates a fan to blow air in a direction toward the discharge outlet 24.

The circular shape of the outer circumferential surface of the mixed flow fan module 70 is the same as or corresponds to a circular inner shape of the housing 10. Therefore, when the mixed flow fan module 70 is fixed or fastened, the size of the housing 10 is not increased, thereby miniaturizing the product. In addition, when the portable air purifier 1 including the mixed flow fan module according to the present disclosure is used for a vehicle, the portable air purifier 1 including the mixed flow fan module may have a size such that the portable air purifier 1 including the mixed flow fan module is accommodated in a cup holder.

The fan type of the mixed flow fan module 70 is a mixed flow fan type, and as an internal structure of the mixed flow fan module 70 is changed to mount the mixed flow fan, an upward discharging type, small-sized air purifier may be provided to maximize an airflow performance.

According to an embodiment of the present disclosure, the mixed flow fan module 70 may include a fan housing 80 having an outer surface that is curved along a circumferential direction and defining an operation space, a fan member 90 rotatably disposed inside of the fan housing 80, and a fan base 130 coupled to the fan housing 80 and to guide air introduction in a direction toward the fan member 90. In addition, a module may be formed by coupling the fan housing 80, the fan member 90, and the fan base 130, thereby facilitating assembly and disassembly and reducing production and maintenance costs.

The fan member 90 according to the present disclosure is rotated by an operation of a motor. Only a rotary shaft of the motor may be connected to the fan member 90 to rotate the fan member 90. The fan member 90 may include a rotor and the fan housing 80 in which rotation is restricted may include a stator. As a magnetic field of the stator is changed, the shaft rotating together with a rotation of the rotor is connected to the fan member 90 to rotate the rotor and the fan member 90 about the stator. As the configuration of the motor to rotate the fan member 90 is a known configuration, a description thereof is omitted.

### [Fan housing]

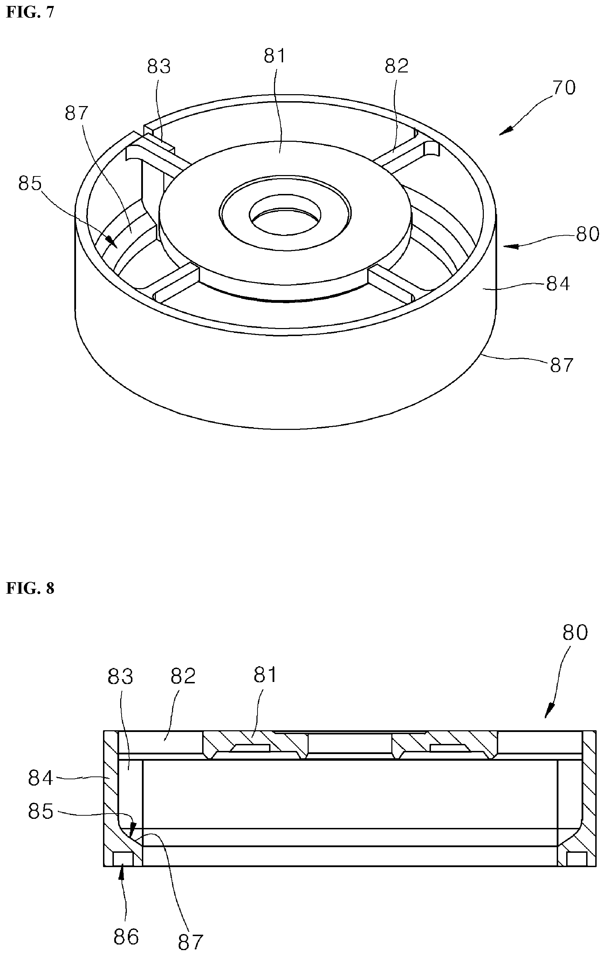

FIG. 7 is a perspective view of an example fan housing 80. FIG. 8 is a cross-sectional view of an example fan housing 80.

As shown in FIGS. 7 and 8, various modifications may be made in the technical field in which the fan housing 80 is coupled to an inside of a housing 10 and includes a space to rotate a fan member 90. According to an embodiment of the present disclosure, the fan housing 80 may include at least one of a supporting plate 81, a connecting supporter 82, a wire guide 83, a side supporter 84, an inner guide 85, or a protrusion mounting groove 86.

The supporting plate 81 is disposed at a central portion of the fan housing 80 and may have a disk shape. In addition, the supporting plate 81 includes a hole at a center thereof. A motor may be disposed at the center of the supporting plate 81, or a shaft connected to a motor may be disposed in a first direction.

The connecting supporter 82 extends radially outward from the supporting plate 81 and is connected to the side supporter 84. A plurality of connecting supporters 82 according to an embodiment of the present disclosure may be provided and may have a bar shape. The connecting supporter 82 that extends radially outward from the supporting plate 81 may be connected to the side supporter 84.

The connecting supporter 82 according to an embodiment of the present disclosure is disposed below a core supporter 350 of a rotation supporter 300 described below. Four connecting supporters 82 are spaced apart from one another by 90 degrees and are arranged with respect to the supporting plate 81. The core supporter 350 is disposed on the connecting supporter 82.

The wire guide 83 is disposed on a side surface of the connecting supporter 82 and supports a lower portion of a wire to move the wire of an electronic device along the side surface of the connecting supporter 82. The wire guide 83 defines a protrusion at a lower portion of the side surface of the connecting supporter 82 and guides the wire of the motor disposed on the supporting plate 81 to extend to an outside of the fan housing 80. The wire guide 83 may be disposed on the side surface of the connecting supporter 82 and may define a concaved groove to receive the wire. The wire disposed on the wire guide 83 is received in the concaved groove defined on the side surface of the connecting supporter 82 and the lower portion of the wire is supported by the wire guide 83, thereby preventing damage to the wire.

The side supporter 84 has a cylindrical pipe shape and defines openings at an upper side and a rear side thereof. An outside of the side supporter 84 contacts an inside of the housing 10 and an inside of the side supporter 84 is connected to the connecting supporter 82. In addition, the side supporter 84 is spaced apart from the supporting plate 81, is connected to the connecting supporter 82, and has a circular curved surface defined along the outer circumference thereof.

The inner guide 85 defines a first inclined surface 87 that is inclined downward from a lower side of the side supporter 84 toward a radial inner side thereof. The inner guide 85 is disposed inside the side supporter 84 and may prevent an air backflow phenomenon in which air blown upward by the fan member 90 flows to an inlet of the fan member 90 through an outer surface of the fan member 90. In addition, the inner guide 85 protrudes to the inside of the side supporter 84 and has the first inclined surface 87. An inner diameter of the first inclined surface 87 is narrowed toward the fan base 130. In addition, the inner guide 85 may be disposed at the lower portion of the side supporter 84 facing the fan base 130.

The protrusion mounting groove 86 is concaved from a lower surface of the side supporter 84 and receives a coupling protrusion 134 of the fan base 130. Various modifications may be made in which the protrusion mounting groove 86 receives the coupling protrusion 134 of the fan base 130 described below. A plurality of protrusion mounting grooves 86 according to an embodiment of the present disclosure are defined along a circumferential direction of the side supporter 84.

### [Fan member]

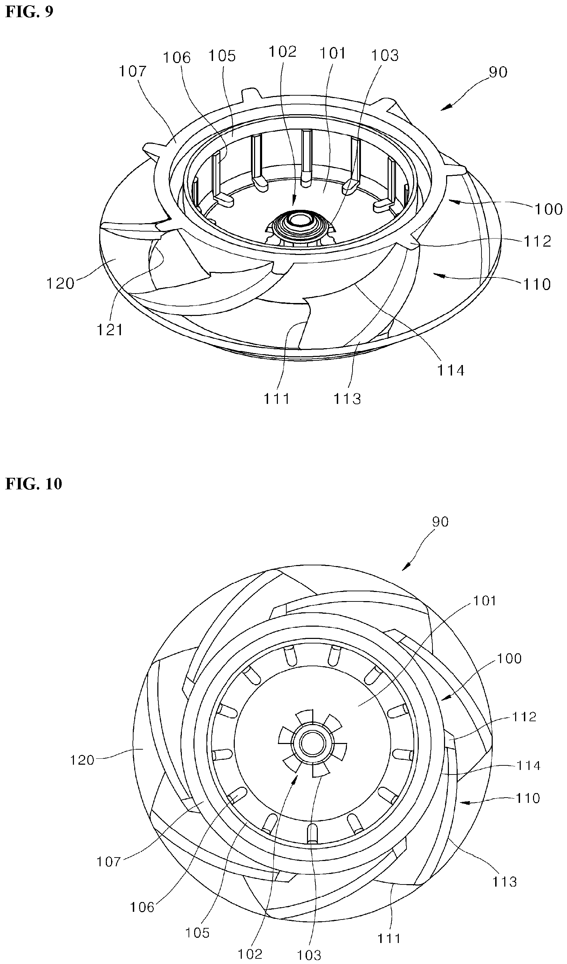

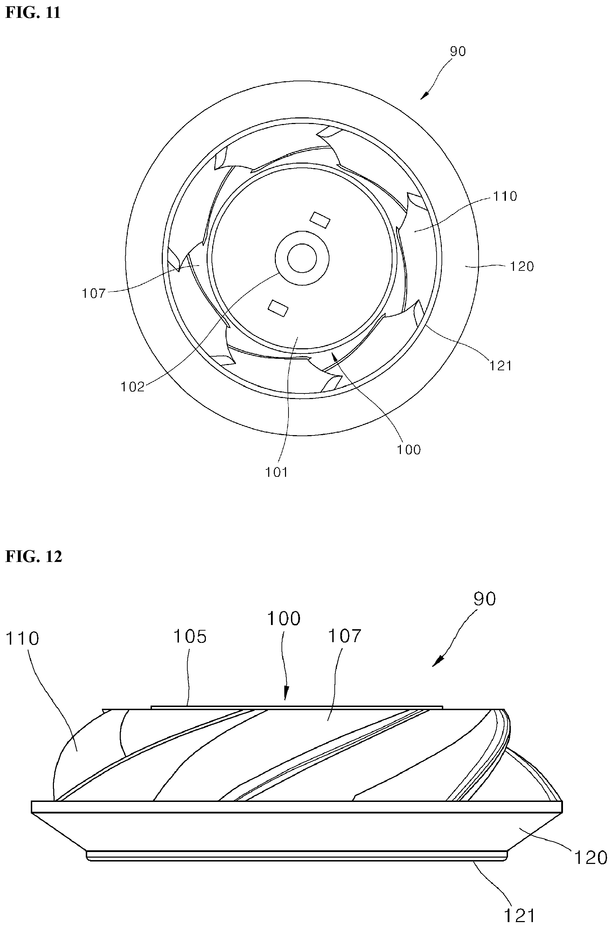

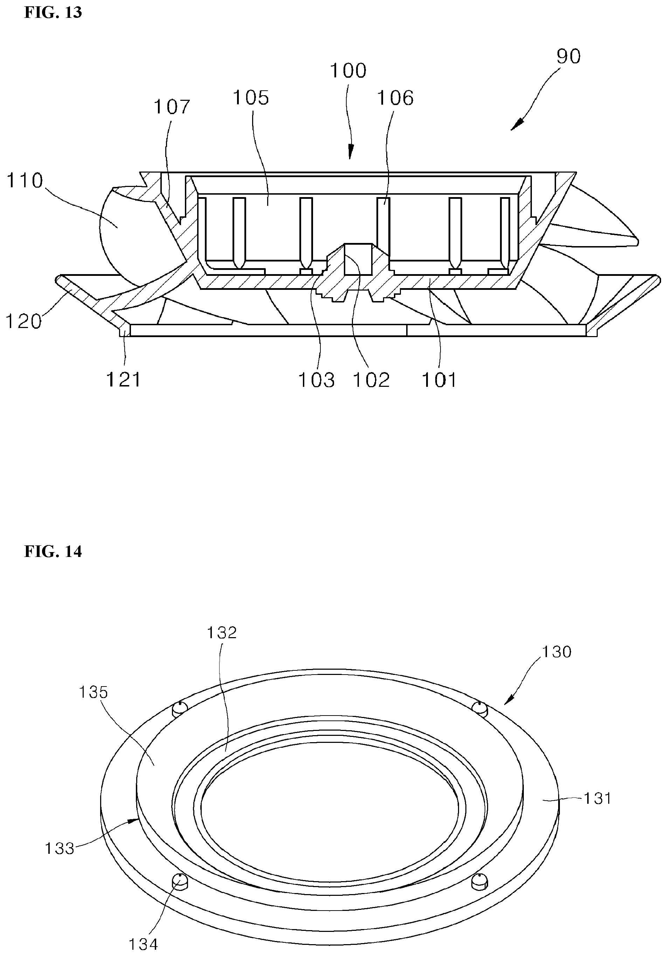

FIG. 9 is a perspective view of an example fan member 90. FIG. 10 is a plan view of an example fan member 90. FIG. 11 is a bottom view of an example fan member 90. FIG. 12 is a front view of an example fan member 90. FIG. 13 is a cross-sectional view of an example fan member 90.

As shown in FIGS. 9 to 13, various modifications may be made in the technical field in which the fan member 90 is rotatably disposed inside a fan housing 80 and may blow air in a direction toward a discharger 140.

A mixed flow fan may be used as the fan member 90, but this is only an embodiment of the present disclosure, and other types of fans may also be used as the fan member 90 according to the present disclosure. The fan member 90 according to an embodiment of the present disclosure may include at least one of a hub 100, a fan blade 110, or a shroud 120.

Various modifications may be made in the technical field in which the hub 100 is disposed at a central portion of the fan housing 80 and rotates by receiving an external power.

The hub 100 may be disposed at a radial center of the fan member 90 and may rotate together with a rotation of a rotor of a motor and a rotation of a shaft which is an output shaft of the motor. According to an embodiment of the present disclosure, the hub 100 may include at least one of a hub plate 101, a shaft coupler 102, an inner protrusion 105, a skirt 107, a first reinforcing protrusion 103, or a second reinforcing protrusion 106.

The hub plate 101 is rotatably disposed inside the fan housing 80 and is located at the radial center of the fan housing 80. In addition, the hub plate 101 may have a disk shape and may be arranged in parallel to the supporting plate 81. The shaft coupler 102 may be disposed on the hub plate 101.

The shaft coupler 102 may be disposed at a radial center of the hub plate 101. The shaft coupler 102 may protrude from the hub plate 101 in at least one direction of an upward direction or a downward direction of the hub plate 101. In addition, the shaft coupler 102 may be coupled to an axial end of the shaft of transmitting a rotational power and may receive the rotational power. For example, the shaft coupler 102 and the shaft may be coupled to each other by fitting the shaft to an outside of the shat coupler 102.

First reinforcing protrusions 103 may be spaced apart from one another by a set distance and may be defined along an outer circumference of the shaft coupler 102. The first reinforcing protrusion 103 is radially disposed around the shaft coupler 102, is defined at an outside of the shaft coupler 102, and has a band shape. With this structure, stress concentrated on the shaft coupler 102 is distributed to the first reinforcing protrusions 103, thereby reinforcing structural rigidity of the shaft coupler 102.

The inner protrusion 105 extends from the hub plate 101 in an upward direction, that is, a direction toward the supporting plate 81. The inner protrusion 105 according to an embodiment of the present disclosure is defined along an outer edge of the hub plate 101 in a circular arc direction. The inner protrusion 105 has a pipe shape that extends in a vertical direction.

In addition, second reinforcing protrusions 106 are spaced apart from one another by a set distance along an inner circumference of the inner protrusion 105. The second reinforcing protrusion 106 extends in the vertical direction along an inner surface of the inner protrusion 105, a lower portion of the second reinforcing protrusion 106 is bent toward the shaft coupler 102, is connected to the hub plate 101, the second reinforcing protrusion 106 has a band shape. The second reinforcing protrusion 106 is defined in the first direction along the inner surface of the inner protrusion 105, the lower portion of the second reinforcing protrusion 106 extends toward the shaft coupler 102, and has a band shape. With this structure, stress concentrated on the inner protrusion 105 is distributed to the second reinforcing protrusion 106, thereby reinforcing structural rigidity of the inner protrusion 105. As necessary, the rotor of the motor may be coupled to the inside of the inner protrusion 105.

The skirt 107 may protrude upward from the inner protrusion 105 or the hub plate 101 toward the supporting plate 81. The skirt 107 according to an embodiment of the present disclosure extends obliquely upward from an outside of the inner protrusion 105. In addition, the skirt 107 may include an inclined surface that is inclined outward in a second direction as the skirt 107 protrudes away from the hub plate 101 in the first direction. The skirt 107 is disposed at the outside of the inner protrusion 105 and an inner diameter of the skirt 107 is increased from a lower side thereof to an upper side thereof.

For example, a shape in which the hub plate 101 and the skirt 107 are connected may be a truncated cone shape including a hollow and defining an opening at a side thereof. The skirt 107 may have a shape of a funnel defining an opening at the top thereof and including the bottom blocked by the hub plate 101.

### [Fan blade]

A plurality of fan blades 110 are provided and may be spaced apart from one another by equal distance along an outer circumferential surface of a hub 100. The fan blade 110 protrudes to an outside of the hub 100 around the hub 100 and extends spirally. In addition, the plurality of fan blades 110 may be spaced apart from one another by a predetermined distance along a circumferential direction of the hub 100.

According to an embodiment of the present disclosure, the fan blade 110 may protrude to an outside of a skirt 107 along a centrifugal direction that extends spirally from a center of the shaft coupler 102. In addition, when a direction toward the shaft coupler 102 from the outside of the shaft coupler 102 is referred to as "a radial direction", a radial inner side of the fan blade 110 may be connected to the skirt 107 and a radial outer side of the fan blade 110 may be connected to a shroud 120 described below. In addition, a first end of the fan blade 110 is connected to the hub 100, the fan blade 110 connects the skirt 107 to the shroud 120, and extends spirally.

The skirt 107 is directly connected to the fan blade 110 among components of the hub 100 and directly contacts air passing through the fan blade 110. The skirt 107 may be closely related to a flow path of air passing through a mixed flow fan module 70.

Each fan blade 110 connecting the shroud 120 to the skirt 107 may include a first end 111, a second end 112, a first edge 113, and a second edge 114.

The first end 111 may be disposed at a front side of the fan blade 110 in a rotational direction and may have a straight shape that extends in the radial direction. The rotational direction is referred to as a rotational direction of the fan member 90.

The second end 112 may be disposed at a rear side of the fan blade 110 in the rotational direction and may be arranged radially around the shaft coupler 102.

The first edge 113 may connect a first end of the first end 111 to a first end of the second end 112. The first edge 113 may be connected to an inner circumferential surface of the shroud 120.

The second edge 114 may connect a second end of the first end 111 to a second end of the second end 112. The second edge 114 may be connected to an outer circumferential surface of the hub 100.

In addition, the second end of the first end 111 and the second end of the second end 112 may be connected to the outer circumferential surface of the skirt 107.

The first end of the first end 111 may be disposed closer to the radial center of the hub plate 101 than the first end of the second end 112. In addition, the second end of the second end 112 may be disposed closer to the radial center of the hub plate 101 than the second end of the first end 111. For this arrangement, the first end and the second end of the first end 111 are disposed forward in the rotational direction than those of the second end 112 and a radius of the skirt 107 becomes narrower toward the front in the rotational direction.

According to this embodiment, the fan blade 110 is connected to the skirt 107 of the hub 100. The skirt 107 defines an inclined surface that is inclined upward to guide the airflow into the mixed flow fan module 70 in an upward inclined direction.

### [Shroud]

Various modifications may be made in the technical field in which a shroud 120 may be connected to a second end of a fan blade 110, have an annular shape, and be spaced apart from a fan base 130.

The shroud 120 is disposed along an outer circumference of a skirt 107 and is connected to the skirt 107 by the fan blade 110. In addition, an outer diameter of the hub 100 and an inner diameter of the shroud 120 may each decrease to a lower side thereof from an upper side thereof.

In addition, a distance between the shroud 120 and the skirt 107 is increased from a lower side thereof toward an upper side thereof. In addition, if an angle between the shroud 120 and a horizontal line is angle B1 and an angle between the skirt 107 and the horizontal line is angle B2, angle B1 is smaller than angle B2. The distance between the shroud 120 and the skirt 107 connected by the fan blade 110 is increased from the lower side thereof to the upper side thereof, thereby facilitating a blowing operation of the mixed flow fan to discharge air in an upward inclined direction and increasing an amount of blown air.

The shroud 120 may be spaced apart from the hub 100 by a predetermined distance in the radial direction and may be disposed radially outside the hub 100. In addition, the shroud 120 may be spaced apart from the hub 100 by a distance corresponding to a radial length of the fan blade 110. In addition, each fan blade 110 may connect between the skirt 107 of the hub 100 and the shroud 120.

The shroud 120 may have an inclined surface substantially in parallel to the skirt 107. In this embodiment, the skirt 107 and the shroud 120 are in an arrangement state in which the distance between the skirt 107 and the shroud 120 is increased toward the upper side of the shroud 120.

According to an embodiment of the present disclosure, the shroud 120 further includes an inlet protrusion 121 defined at a lower portion of the shroud 120. The inlet protrusion 121 defined at the lower portion of the shroud 120 has a ring shape and extends from the lower side of the funnel-shaped shroud 120 in the first direction. In addition, the inlet protrusion 121 extends downward and is spaced apart from the fan base 130 by a set distance. The inlet protrusion 121 is defined inside a bell mouth 132 described below, thereby preventing air backflow to the inlet defined at the lower portion of the shroud 120 along the outside of the shroud 120.

### [Fan Base]

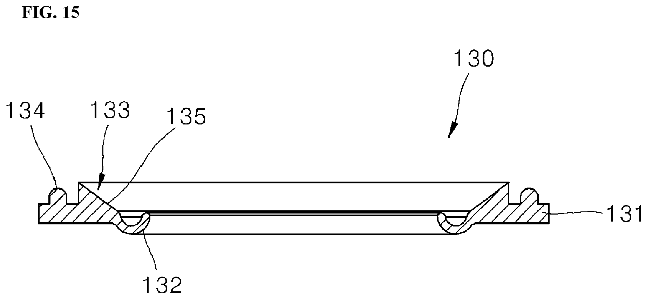

FIG. 14 is a perspective view of an example fan base 130. FIG. 15 is a cross-sectional view of an example fan base 130.

As shown in FIGS. 14 and 15, various modifications may be made in the technical idea in which the fan base 130 is coupled to a lower surface of a fan housing 80 and introduces air into a fan member 90 through a filter 40.

In addition, the fan base 130 may include a base plate 131 and a bell mouth 132. The base plate 131 has a plate shape, extends annularly, and includes a hole at a central portion thereof to flow air. The bell mouth 132 has an annular shape, is disposed along an inner side of the base plate 131 facing the hole, defines a groove concaved upward, and surrounds a lower side of an inlet protrusion 121.

The fan base 130 may be disposed between the filter 40 and the fan member 90. In addition, an edge shape of the fan base 130 may correspond to that of the filter 40. For example, when the filter 40 has a cylindrical shape and the edge of the filter 40 has a circular shape, the fan base 130 may have an annular shape with a hollow.

The base plate 131 may be disposed between the filter 40 and the fan member 90. The base plate 131 has a plate shape, extends annularly, and includes a hollow at a center thereof to flow air.

The bell mouth 132 has an annular shape and is disposed at an inside of the base plate 131 facing the hollow. The bell mouth 132 has a concaved longitudinal cross-section surrounding the lower surface of the inlet protrusion 121 of the shroud 120 and extends along a circumferential direction.

The bell mouth 132 may surround an outer circumferential surface of the hollow defined at the center of the base plate 131. The bell mouth 132 may be convexed toward the lower side thereof and may define a groove that is concaved toward the upper side thereof.

At least a portion of the bell mouth 132 may be inserted into the radial inner side of the shroud 120. The bell mouth 132 guides a suction flow at the inlet of the mixed flow fan module 70, thereby contributing to improvement of a suction and discharge performance of the mixed flow fan module 70.

A coupling protrusion 134 protrudes upward from a base plate 131. The fan base 130 is coupled to the lower surface of the housing 80 by fitting the coupling protrusion 134 into the protrusion mounting groove 86 of the fan housing 80.

The fan base 130 and the fan housing 80 may be coupled to each other at a plurality of points by coupling the coupling protrusion 134 and the protrusion mounting groove 86. When the fan base 130 and the fan housing 80 are coupled to each other, the fan member 90 may be rotatably disposed between the fan base 130 and the fan housing 80.

The protruding rib 133 protrudes from the base plate 131 and may be disposed radially outside the bell mouth 132. The protruding rib 133 according to an embodiment of the present disclosure is disposed at the radial outer side of the bell mouth 132, surrounds an outer circumference of the bell mouth 132, and has an annular shape. In addition, the protruding rib 133 may be integrated with the base plate 131. More specifically, the base plate 131, the bell mouth 132, and the protruding rib 133 may be integrated.

According to an embodiment of the present disclosure, the protruding rib 133 includes a second inclined surface 135 that is spaced apart from the shroud 120, and an inner diameter of the second inclined surface 135 is increased toward the upper side thereof. In addition, the second inclined surface 135 is disposed in parallel to an outer surface of the shroud 120. In addition, an angle between the first inclined surface 87 and the horizontal line is the same as an angle between the second inclined surface 135 and the horizontal line.

In addition, the protruding rib 133 may be inclined by the same angle as the outer surface of the shroud 120, and a distance between the protruding rib 133 and the shroud 120 may be maintained constant. The protruding rib 133 facing the shroud 120 protrudes upward from the base plate 131 and includes a second inclined surface 135 on an upper surface thereof. The second inclined surface 135 of the protruding rib 133 is spaced apart from the shroud 120 by a set distance and may be disposed in parallel to the outside of the shroud 120.

In addition, the second inclined surface 135 of the protruding rib 133 may have the same inclination angle as the first inclined surface 87 of the inner guide 85 of the fan housing 80. Therefore, the air backflow phenomenon in which a portion of the air moving upward through a space between the shroud 120 and the skirt 107 flows to an inlet of the fan member 90 through a space between the shroud 120 and the protruding rib 133 may be prevented.

A passage between the fan member 90 and the fan base 130 is narrow and the bell mouth 132 of the fan base 130 surrounds the lower surface of the shroud 120 to reduce or block the airflow to the inlet of the fan member through the outside of the fan member 90, thereby preventing the air backflow phenomenon.

### [Structure of portable air purifier including mixed flow fan module]

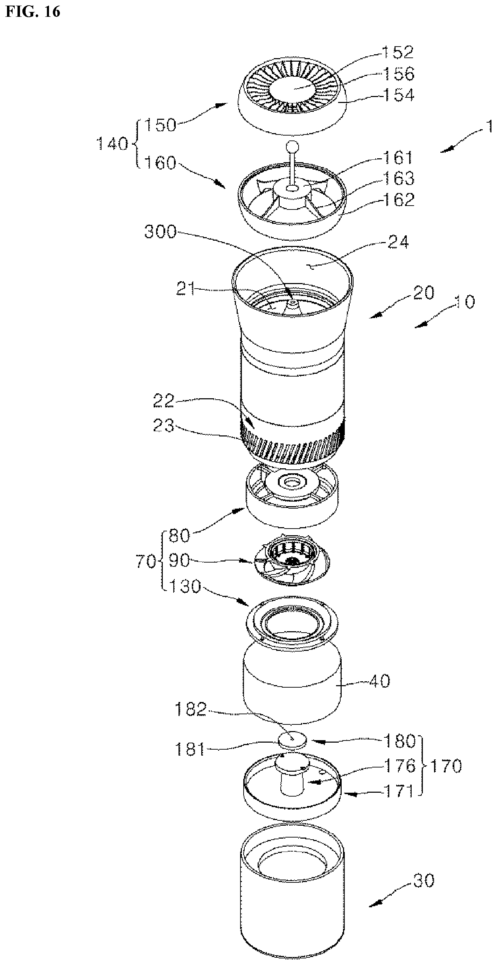

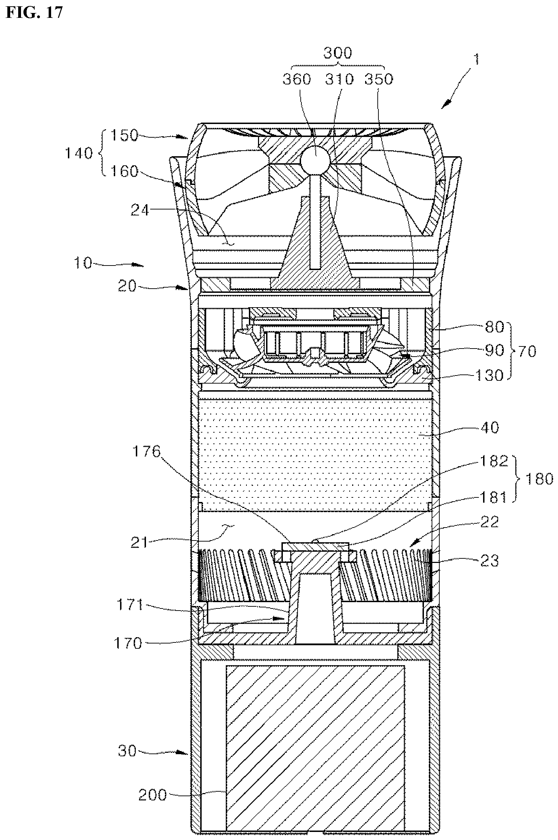

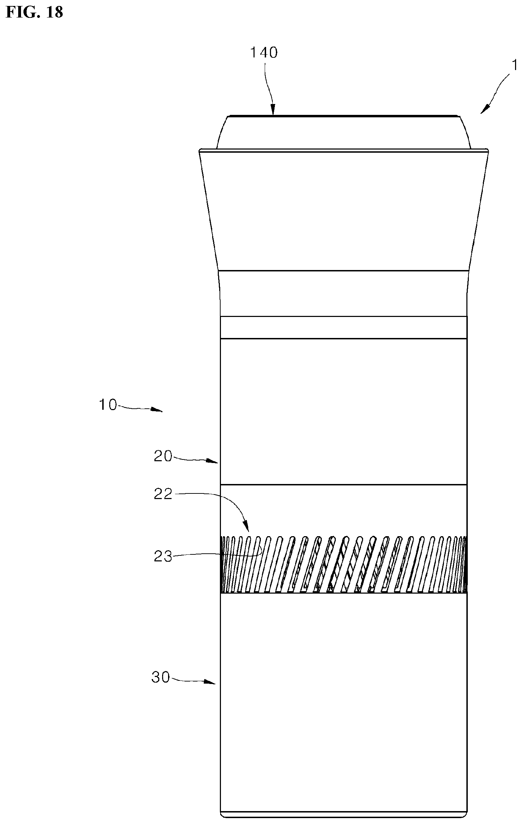

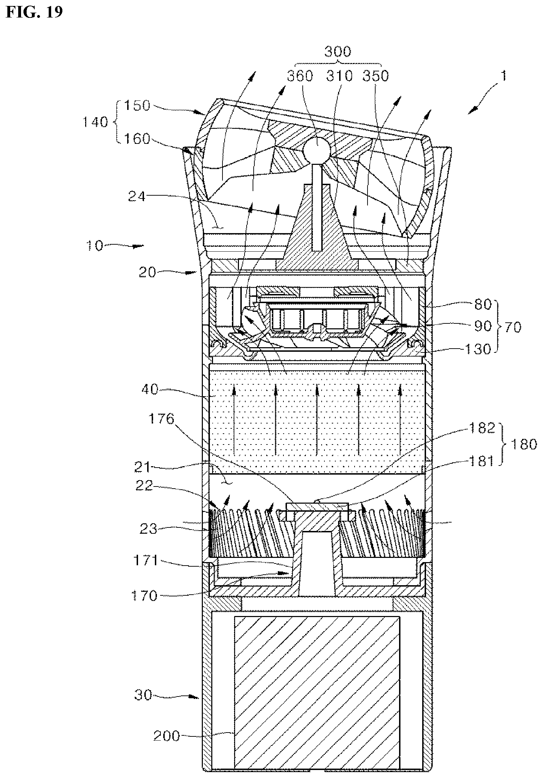

FIG. 16 is an exploded perspective view of an example portable air purifier 1 including a mixed flow fan module. FIG. 17 is a cross-sectional view of an example portable air purifier 1 including a mixed flow fan module. FIG. 18 is a front view of an example portable air purifier 1 including a mixed flow fan module. FIG. 19 is a cross-sectional view of an example portable air purifier 1 including a mixed flow fan module showing airflow passing through the portable air purifier 1.

As shown in FIGS. 16 to 19, the portable air purifier 1 having the mixed flow fan module according to an embodiment of the present disclosure may include a mixed flow fan module 70, a housing 10, and a filter 40. The mixed flow fan module 70 includes a fan housing 80 having an outer surface that is curved along a circumferential direction and defining an operation space, a fan member 90 rotatably disposed inside the fan housing 80, and a fan base 130 coupled to the fan housing 80 to guide air introduction toward the fan member 90. The housing 10 accommodates the mixed flow fan module 70, includes a cylindrical inner flow path in contact with the fan housing 80 and that extends in a vertical direction, and defines an inlet 22 to suction air from a lower portion of the mixed flow fan module 70. The filter 40 is accommodated in the housing 10, is located on at least one of a lower surface or an upper surface of the mixed flow fan module 70, and purifies air. In addition, the portable air purifier 1 having the mixed flow fan module may include at least one of a discharger 140, a sterilizer 170, a battery 200, or a rotation supporter 300.

According to an embodiment of the present disclosure, the housing 10 includes a first case 20 and a second case 30. The first case 20 and the second case 30 form an external skeleton of the portable air purifier 1 including the mixed flow fan module. The housing 10 defines a cylindrical air flow path and guides airflow toward the upper side thereof from the lower side thereof. In addition, the housing 10 accommodates the mixed flow fan module 70 having a circular edge. A gap is prevented from being generated between the mixed flow fan module 70 and the housing 10 and airflow between the mixed flow fan module 70 and the housing 10 is blocked.

In addition, the air is introduced from the lower portion of the housing 10, is discharged above the housing 10 by the mixed flow fan module 70, and easily reaches a user located above the air purifier.

A side appearance and a bottom appearance of the portable air purifier 1 including the mixed flow fan module are defined by the first case 20 and the second case 30. The first case 20 and the second case 30 include an accommodating space. The accommodating space receives electrical components including the filter 40, the mixed flow fan module 70, the sterilizer 170, a rotation supporter 300, and a battery 200. The first case 20 and the second case 30 preferably have sufficient strength to protect the components accommodated in the accommodating space from external impact.

The filter 40 is accommodated in the accommodating space of the first case 20 and is disposed between the mixed flow fan module 70 and the inlet 22. That is, the filter 40 is disposed under the mixed flow fan module 70 and purifies the air suctioned through the inlet 22 of the portable air purifier 1 including the mixed flow fan module. The air is purified by passing through the filter 40 and is discharged above the portable air purifier 1 including the mixed flow fan module through the mixed flow fan module 70 and the discharger 140.

The filter 40 is accommodated inside the first case 20 and purifies the air introduced into the inlet 22. In addition, the filter 40 may have a cylindrical shape that extends in a vertical direction.

The filter 40 may include a single filter, and as necessary, may include a plurality of filters disposed in a stacked state. In addition, the filter 40 may further include an additional filter case to couple the filter.

The filter case may be coupled to the inside of the first case 20 and include an insertion space to accommodate the filter.

The mixed flow fan module 70 may be accommodated in the accommodating space inside the first case 20 and may be disposed between the discharger 140 and the filter 40. More specifically, the mixed flow fan module 70 may be disposed between a discharge outlet 24 and the filter 40. That is, the mixed flow fan module 70 is disposed on the filter 40, and the discharge outlet 24, a rotation supporter 300, and the discharger 140 are each disposed above the mixed flow fan module 70. The mixed flow fan module 70 suctions air through the inlet 22 from the lower portion of the filter 40 and discharges the air above the first case 20.

A rotational center of the discharger 140 may be the same as a center of the mixed flow fan module 70 in the vertical direction. The air is introduced through the inlet 22, flows upward, and is discharged above the portable air purifier 1 including the mixed flow fan module through the filter 140, the mixed flow fan module 70, and the discharger 140.

The mixed flow fan module 70 may suction the air that has passed through the filter 40 in an axial direction and discharge the air in a direction between the axial direction and a radial direction.

The discharger 140 may be rotatably disposed on the first case 20 and may guide a discharge direction of the air moving upward through the discharge outlet 24. The rotation supporter 300 is disposed on the first case 20 and the discharger 140 is rotatably disposed on the rotation supporter 300. As the discharger 140 defines openings at an upper side and a lower side thereof, the air moved to the lower side of the discharger 140 through the discharge outlet 24 may be discharged to an outside of the portable air purifier 1 including the mixed flow fan module through the upper side of the discharger 140.

The sterilizer 170 may be disposed below the filter 40 and be coupled to at least one of the first case 20 or the second case 30. The sterilizer 170 is spaced apart from the filter 40 by a set distance and transmits a light for sterilization toward the filter 40. As the light for sterilization transmitted by the sterilizer 170 is harmful to the human body, the installation position of the sterilizer 170 is set to prevent the light for sterilization from transmitting to the outside of the portable air purifier 1 including the mixed flow fan module through the inlet 22.

The battery 200 is accommodated in the accommodating space inside the second case 30 and is disposed below the sterilizer 170. The battery 200 may supply power to drive the portable air purifier 1 including the mixed flow fan module.

Directions are defined. When a direction toward the discharger 140 from the first case 20 is referred to as "an upward direction" and a direction toward the second case 30 from the first case 20 is referred to as "a downward direction", a first direction refers to a vertical direction or an axial direction. In addition, the first direction may be the same as the vertical direction. In addition, "the second direction" is perpendicular to the first direction and refers to a lateral direction, a horizontal direction, or a radial direction.

### [Housing]

A housing 10 includes an inlet 22 and may accommodate a filter 40, a sterilizer 170, and a mixed flow fan module 70. In addition, the housing 10 defines an air flow path that extends in a vertical direction. As the housing 10 defines a cylindrical air flow path, frictional resistance of air moving in the vertical direction may be reduced.

In addition, centers of the inlet 22, the filter 40, the sterilizer 170, a mixed flow fan module 70, a discharge outlet 24, and a rotation supporter 300 may be the same in a vertical direction along a vertical reference line passing through a center of the housing 10 in the vertical direction. The air vertically flows from a lower side of the housing 10 to an upper portion of the housing 10 in a straight line to shorten an air movement path. Thereby, air flow path resistance is reduced and air purification efficiency is improved.

When a portable air purifier 1 including a mixed flow fan module is disposed on a horizontal surface, the vertical reference line is the same as the vertical line. In addition, the housing 10 may include a single member or may preferably include a plurality of members.

The portable air purifier 1 including the mixed flow fan module may have a vertical, elongated cylindrical shape that extends in the vertical direction. The user may use the portable air purifier 1 including the mixed flow fan module in a vertical state or a laid state. In addition, as the portable air purifier 1 including the mixed flow fan module is accommodated in a groove concaved downward such as a cup holder in a place where shaking occurs, such as an inside of a vehicle, the portable air purifier 1 may stably maintain its position.

### [Configurations of component of portable air purifier]

According to an embodiment of the present disclosure, a portable air purifier 1 having a mixed flow fan module may include at least one of a housing 10, a filter 40, a mixed flow fan module 70, a discharger 140, or a rotation supporter 300. In addition, according to an embodiment of the present disclosure, the portable air purifier 1 having the mixed flow fan module may further include a sterilizer 170 and a battery 200.

### [First case]

A housing 10 includes a first case 20 and a second case 30. The first case 20 may include an accommodating space and may define an inlet 22 at a side surface of a lower portion thereof to suction air. The first case 20 may have a cylindrical shape and may define openings at an upper side and a lower side thereof. The first case 20 may include a single component, or as necessary, may include a plurality of members. According to an embodiment of the present disclosure, various modifications can be made in which the first case 20 includes the plurality of members, the members may be coupled by fitting, an adhesive, or welding, and may be connected by a fastening member such as a bolt.

Air is suctioned through the side surface of the lower portion of the first case 20 and is discharged through the upper side of the first case 20. For the air suction and air discharging, the first case 20 may define the inlet 22 including an inlet hole 23 along a circumference of the lower portion of the first case 20 and define a discharge outlet 24 at the upper portion of the first case 20.

In addition, the filter 40 is disposed above the inlet 22 when the inlet 22 is defined along an outer circumference of the first case 20 to suction the air. Therefore, air may flow uniformly in entire surface of the filter 40.

The inlet 22 includes a plurality of inlet holes 23. The plurality of inlet holes 23 may be inclined obliquely, and as necessary, may have an inequality sign shape with a bent center. In addition, various modifications may be made in which the housing 10 accommodating the filter 40 may further include an inlet hole 23 on a side surface thereof to increase a rate of airflow into the filter 40.

Various modifications may be made in which the housing 10 include a plurality of three or more members.

### [Second case]

Various modifications may be made in the technical idea in which a second case 30 is connected to a lower surface of a first case 20 and includes a space to accommodate electric components having a battery 200.

At least one of the first case 20 or the second case 30 may have a cylindrical shape. Both the first case 20 and the second case 30 may have the cylindrical shape, and only the second case 30 may have the cylindrical shape. Alternatively, only the first case 20 may be have the cylindrical shape as necessary.

When the second case 30 has the cylindrical shape and extends in a vertical direction, the user may easily grab an outer circumference of the second case 30 by hands and may easily place the second case 30 in a cup holder of a vehicle defining a circular cross-sectional groove.

In addition, when the first case 20 has the cylindrical shape, friction generated by contact with the curved inner surface of the first case 20 when the air moves upward through the inside of the first case 20 is reduced, thereby facilitating airflow.

The first case 20 defines an air flow path and the second case 30 does not define an air flow path. Even when the second case 30 is supported by the cup holder or is grabbed by the hands of the user, the air may be easily suctioned into and discharged from the first case 20, thereby improving user convenience.

### [Filter]

Various modifications may be made in the technical field in which a filter 40 is accommodated inside a first case 20 and purifies air introduced into an inlet 22. According to an embodiment of the present disclosure, the filter 40 may have a cylindrical shape.

The first case 20 has a circular pipe shape and the filter 40 accommodated inside the first case 20 also has a cylindrical shape and contacts an inside of the first case 20 such that impurities in the air passing through the inside of the first case 20 may be effectively removed.

In addition, the filter 40 has a circular cross-section and includes a largest area inside the first case 20. In addition, the filter 40 is manufactured in a cylinder shape such as a cylindrical shape. The filter 40 is manufactured by cutting a cylindrical fabric. The cylindrical filter 40 may obtain a large air movement path, thereby minimizing pressure loss and improving air purification efficiency of the filter 40.

In addition, an outer diameter of the filter 40 is manufactured to be larger than a suction diameter of a bell mouth 132 to guide air suction into a mixed flow fan module 70, thereby maximizing a volume of the filter 40.

In addition, according to this embodiment, the filter 40, the mixed flow fan module 70, and the discharger 140 are arranged in the vertical direction along the housing 10, and the air may also flow in the vertical direction. That is, the air may flow in a straight direction as the arrangement direction of the filter 40, the mixed flow fan module 70, and the discharger 140 based on the operation of the mixed flow fan module 70.

When the air flows in the straight direction, the resistance to the airflow is lowered and the airflow may be facilitated. Therefore, a sufficient amount of air may be suctioned and discharged by the mixed flow fan module 70, thereby improving an air purification performance of the portable air purifier 1 including the mixed flow fan module.

### [Discharger]

Various modifications may be made in the technical idea in which a discharger 140 is disposed at a discharge outlet 24 of housing 10, is rotatably disposed on a rotation supporter 300, and guides a discharge direction of air passing through a mixed flow fan module 70. According to the present disclosure, the discharger 140 is rotatably disposed on a spherical ball joint 360 of the rotation supporter 300, thereby facilitating the rotation operation thereof.

The discharger 140 disposed at the upper portion of the housing 10 is opened in the vertical direction and is rotatably connected to the rotation supporter 300 to adjust a discharging direction of the air through the mixed flow fan module 70. According to an embodiment of the present disclosure, the discharger 140 may include a first discharger 150 and a second discharger 160.

### [First discharger]

Various modifications may be made in the technical field in which a first discharger 150 is disposed at a first side of a ball joint 360 and includes a plurality of vanes 156 to guide discharging of air. According to an embodiment of the present disclosure, the first discharger 150 may include a first discharging core 152, a first discharging body 154, and a vane 156.

The first discharging core 152 is disposed above the ball joint 360 and may have various shapes including a disk shape. In addition, the first discharging body 154 may be spaced apart from the first discharging core 152, may have an annular shape, and may surround an outside of the first discharging core 152. In addition, an outer side of the first discharging body 154 has a curved shape and is spaced apart from the housing 10, thereby preventing contact with the housing 10 when the first discharger 150 is rotated.

In addition, as the first discharging core 152 and the first discharging body 154 are connected to each other by the plurality of vanes 156, the first discharging core 152, the first discharging body 154, and the vane 156 may be rotated together.

### [Second discharger]

Various modifications may be made in the technical field in which a second discharger 160 is disposed at a second side of a ball joint 360 (i.e. a lower side of the ball joint 360 FIG. 17), is connected to a first discharger 150, and is rotated about the ball joint 360 together with a roation of the first discharger 150. According to an embodiment of the present disclosure, the second discharger 160 may include a second discharging core 161, a second discharging body 162, and a discharging supporter 163.

The second discharging core 161 surrounds a lower side of the spherical ball joint 360 and is disposed below the first discharging core 152. In addition, the second discharging body 162 has an annular shape, surrounds an outside of the second discharging core 161, and includes a curved outer surface.

In addition, as the second discharging core 161 and the second discharging body 162 are connected by a plurality of discharging supporters 163, the second discharging core 161, the second discharging body 162, and the discharging supporter 163 may be rotated together.

### [Sterilizer]

Various modifications may be made in the technical idea in which a sterilizer 170 is disposed between a filter 40 and a second case 30 and transmits a light for sterilization toward the filter 40. According to an embodiment of the present disclosure, the sterilizer 170 may include at least one of a sterilization supporter 171, a supporter 176, or a transmitter 180.

### [Sterilization supporter]

A sterilization supporter 171 is disposed between a first case 20 and a second case 30 and closes a lower surface of the first case 20. In addition, various modifications may be made in the technical idea in which the sterilization supporter 171 is disposed below the transmitter 180 and is connected to a housing 10 to restrict movement thereof.

Air is introduced into the first case 20 through an inlet 22 and is blocked from moving to the second case 30 by the sterilization supporter 171, thereby increasing a flow rate of air moving to a mixed flow fan module 70 and improving an air purification performance of a portable air purifier 1 including a mixed flow fan module.

Various modifications may be made in the technical idea in which the supporter 176 protrudes upward from a center of the sterilization supporter 171 and supports a lower surface of the transmitter 180. In addition, the supporter 176 is disposed at a radial center of the inlet 22 and has a circular cross-section, thereby reducing air friction.

The supporter 176 may have a column shape and may protrude upward from the center of the sterilization supporter 171. In addition, the supporter 176 may have a cylindrical shape or a conical shape. According to an embodiment of the present disclosure, a cross-section of the supporter 176 is narrowed from a lower side thereof to an upper side thereof and is disposed at a center of the first case 20 including the inlet 22, thereby minimizing the air friction.

The sterilization supporter 171 has a circular cross-section and sterilizes the filter 40. The air introduced through the inlet 22 rotates spirally by the inclined shape of the inlet hole, rotates an outside of a supporting column 177, and is moved upward toward the filter 40. That is, the sterilizer 170 is disposed at a central portion of the first case 20, and the air introduced through the inlet 22 moves upward while rotating an outer circumference of the sterilizer 170, thereby reducing flow path resistance of the sterilizer 170.

A rotational center of the supporter 176 and the fan member 90 and a core member 310 of the rotation supporter 300 described below are disposed on a vertical straight line. Therefore, resistance to the air moving from the lower side to the upper side is lowered, thereby facilitating airflow. Based on the easy airflow, an air purification performance of the portable air purifier 1 including the mixed flow fan module is improved.

The transmitter 180 is disposed on the supporter 176 and may transmit a light for sterilization in a direction toward the filter 40. In addition, the transmitter 180 may be disposed on a vertical reference line passing through a radial center of the inlet 22 in the vertical direction. Therefore, when the filter 40 is disposed on the transmitter 180, a relatively low number of sterilization light source 182 may sterilize an entire lower surface of the filter 40, thereby reducing production and maintenance costs.

In addition, various modifications may be made in the technical field in which the transmitter 180 is provided at a same position as or higher than an upper side of the inlet 22. According to an embodiment of the present disclosure, the transmitter 180 may include a printed circuit board 181 and a sterilization light source 182. The printed circuit board 181 is disposed on the supporter 176 and places the sterilization light source 182 to transmit the sterilization light source. The sterilization light source 182 may be a ultraviolet rays (UVC) light emitting diode (LED). Also, various types of sterilization devices may be used within the technical idea of sterilizing bacteria in the filter 40.

As the sterilization light source 182 of the sterilizer 170 is disposed on the inlet 22, light transmission to an outside of the first case 20 through the inlet 22 by the sterilization light source 182 may be prevented.

### [Rotation supporter]

Various modifications may be made in the technical idea in which a rotation supporter 300 is connected to a housing 10 and rotatably supports a discharger 140. In addition, the rotation supporter 300 may rotatably support the discharger 140 at a center of a discharge outlet 24 defined inside the housing 10. According to an embodiment of the present disclosure, the rotation supporter 300 may include at least one of a core member 310, a core supporter 350, or a ball joint 360.

The core member 310 is disposed below the discharger 140 to control a discharge direction of air and may extend from a center of the discharge outlet 24 toward the discharger 140. A core member 310 is disposed at a radial center of the second case 30.

A cross-section of a lower side of the core member 310 has a circular shape and the cross-section thereof has the same center as a center of the mixed flow fan module 70 described below. That is, a supporting plate 81 disposed at a radial center of the mixed flow fan module 70 is located below the core member 310. Air is moved upward along an outer circumference of the supporting plate 81, flows upward along an outside of the core member 310, and is moved inside the discharger 140, thereby reducing flow path resistance of air and improving air cleaning efficiency.

A lower surface of the core member 310 facing the supporting plate 81 of the mixed flow fan module 70 has the same area as or smaller area than that of the supporting plate 81 such that an increase in flow path resistance due to the contact of air passing through the mixed flow fan module 70 with the lower surface of the core member 310 may be prevented. A cross-sectional area of the lower surface of the core member 310 is the same as or smaller than that of the supporting plate 81 of the mixed flow fan module 70. The core member 310 is disposed above the supporting plate 81 in a first direction.

In addition, as the core member 310 has a conical shape that protrudes upward, the frictional area with the air moving outside the core member 310 is minimized and the air friction is reduced, thereby improving the air cleaning efficiency.

A core supporter 350 extends to the outside of the core member 310 and is connected to the housing 10. Therefore, movements of the core supporter 350 and the core member 310 are restricted.

In addition, according to an embodiment of the present disclosure, the core supporter 350 may be disposed above a connecting supporter 82 of the mixed flow fan module 70 described below. For example, when four connecting supporters 82 are disposed by 90 degrees around the supporting plate 81, four core supporters 350 are also disposed by 90 degrees around the core member 310. The connecting supporter 82 is disposed at the lower surface of the core supporter 350, and the core supporter 350 and the connecting supporter 82 are overlapped with each other when viewed from the top of the core supporter 350.

Therefore, the air is moved upward through the outside of the connecting supporter 82 and passes through the outside of the core supporter 350 disposed on the connecting supporter 82, thereby minimizing friction generated by the air movement and improving the air cleaning efficiency.

According to another embodiment of the present disclosure, four or more core supporters 350 may be disposed radially around the core member 310. In addition, various modifications may be made in which an edge member may be coupled to the housing 10 when the core supporter 350 is connected to the ring-shaped edge member.

Various modifications may be made in the technical field in which the ball joint 360 is coupled to the core member 310 and rotatably supports the discharger 140. According to an embodiment of the present disclosure, the ball joint 360 has a spherical end, is coupled to the inside of the discharger 140, and may rotatably support the discharger 140. An upper portion of the ball joint 360 has a spherical shape and the body of the bar-shaped ball joint 360 that extends downward from the spherical upper portion is inserted into and coupled to the core member 310 through a hole defined at an upper side of the core member 310. The ball joint and the core member 310 may be coupled by various coupling methods, for example, by screw fastening, pin fastening, or an adhesive.

### [Airflow of portable air purifier]

An airflow pattern of a portable air purifier according to this embodiment is described.

A housing 10 includes an inlet 22 along an outer circumference of a first case 20 to suction external air and air outside the first case 20 is introduced into the first case 20 through the inlet 22, thereby increasing an air suction flow rate.

Air outside of the portable air purifier 1 including a mixed flow fan module is introduced into the portable air purifier 1 including the based on an operation of a mixed flow fan module 70. In this case, the air outside of the portable air purifier 1 including the mixed flow fan module forms a spiral airflow through an inclined inlet hole 23. The air that have passed through the inlet hole 23 moves upward while rotating an outer circumference of a sterilization supporter 171.

The air is introduced into the first case 20, is moved upward while spirally rotating, and passes through a filter 40. In this process, the filter 40 may filter out physical particles such as dust/fine dust/ultrafine dust, chemical substances such as odor particles/harmful gases, and microorganisms such as bacteria/viruses.

The filter 40 and the mixed flow fan module 70 are arranged on a vertical straight line, thereby minimizing flow loss and efficiently suctioning and filtering the air.

The air that has passed through the filter 40, that is, the purified air may be introduced into the mixed flow fan module 70. The airflow may be guided by a bell mouth 132. Therefore, easy air introduction into the mixed flow fan module 70 may be induced.

The air introduced into the mixed flow fan module 70 is discharged above the mixed flow fan module 70. The air may be discharged above the mixed flow fan module 70 in a mixed flow direction. In this case, the mixed flow direction may be referred to as an upward diagonal direction.

Air is suctioned into a lower central portion of the mixed flow fan module 70 and moves in an upward inclined direction through a space between the hub 100 including the fan blade 110 and the shroud 120. In addition, the air is moved upward along the side supporter 84 that extends vertically and has an upward straightness.

A bell mouth 132 is disposed to prevent an air backflow phenomenon in which a portion of the air moving rearward of the fan member 90 (i.e., upward of the fan member of FIG. 6) based on the rotation of the fan member 90 flows back to an inlet of the fan member 90 through the space between the fan member 90 and the fan base 130. The bell mouth 132 surrounds the inlet protrusion 121 of the shroud 120 in a hemispherical shape and is spaced apart from the inlet protrusion 121 by a set distance.

In addition, a second inclined surface 135 of the protruding rib 133 and the shroud are disposed in parallel to each other and a distance between the second inclined surface 135 and the shroud 120 is small to prevent the air backflow phenomenon.

In addition, the first inclined surface 87 defined on an upper surface of the inner guide 85 is inclined by a same angle as the second inclined surface 135 and connects the side supporter 84 to the protruding rib 133.

The air is moved in a rearward direction (e.g., an upward direction of FIG. 6) of the fan member 90 by the rotation of the fan member 90 and is discharged upward from the fan member 90 without the air backflow phenomenon because a passage formed by the first inclined surface 82, the second inclined surface 135, and the shroud 120 is smaller than a space between the fan member 90 and the side supporter 84.

The passage between the bell mouth 132 and the inlet protrusion 21 is small. Therefore, an air backflow phenomenon in which a portion of the air introduced between the second inclined surface 135 and the shroud 120 flows to the space between the bell mouth 132 and the inlet protrusion 121 may be prevented.

The first inclined surface 83 extends obliquely toward the side supporter 84. The air is moved obliquely upward along the first inclined surface 83 and is moved upward along the side supporter 84 when the air moves upward from the fan housing 80 through the fan member 90. Therefore, the air backflow phenomenon in which the air is moved downward from the first inclined surface 87 may be prevented.

The air is discharged upward from the mixed flow fan module 70, is introduced into the discharger 140 through a lower side of the discharger 140, and is discharged upward from the discharger 140. As the discharger 140 is rotated within a set angle range, a discharging direction of air may be adjusted based on an installation angle of the discharger 140.

In addition, as an inner side of the discharger 140 defines a concaved groove, an increase in discharge resistance of the air whose direction is changed by the discharger 140 may be reduced. In addition, the filter 40, the mixed flow fan module 70, and the discharger 140 are arranged on a vertical straight line, thereby efficiently suctioning air, filtering, and discharging the purified air while minimizing flow loss of air.

According to the present disclosure, the portable air purifier uses the mixed flow fan module 70 to maximize a blowing performance thereof when the air discharge direction is the axial direction under a fixed pressure condition. In addition, the fan base 130 maintains a constant distance from the fan member 90 and provides an air backflow prevention structure, which extends to the inner wall of the fan housing 80, thereby minimizing flow loss due to the air backflow.

In addition, the mixed flow fan module 70 is disposed inside the cylindrical housing 10 in a customized manner compared to other fan modules using a fan of the same diameter. Therefore, there is no increase in size due to the fastener and the mixed flow fan module and the portable air purifier including the mixed flow fan module may be miniaturized.

Although the present disclosure has been described as described above, the present disclosure is not limited to the embodiments and drawings disclosed herein, and various modifications can be made by those skilled in the art within the scope of the technical idea of the present disclosure. Further, even if working effects obtained based on configurations of the present disclosure are not explicitly described in the description of embodiments of the present disclosure, effects predictable based on the corresponding configuration have to be recognized.

**Description of Reference Numerals**

| | | | |
|---|---|---|---|
| 1: | Portable air purifier including mixed flow fan module | 40: | Filter |
| | | 70: | Mixed flow fan module |
| 10: | Housing | 80: | Fan housing |
| 20: | First case | 81: | Supporting plate |
| 21: | Accommodating space | 82: | Connecting supporter |
| 22: | Inlet | 83: | Wire guide |
| 23: | Inlet hole | 84: | Side supporter |
| 24: | Discharge outlet | 85: | Inner guide |
| 30: | Second case | 86: | Protrusion mounting groove |
| 87: | First inclined surface | 171: | Sterilization supporter |
| 90: | Fan member | 176: | Supporter |
| 100: | Hub | 180: | Transmitter |
| 101: | Hub plate | 181: | Printed circuit board |
| 102: | Shaft coupler | 182: | Sterilization light source |
| 103: | First reinforcing protrusion | 200: | Battery |
| 105: | Inner protrusion | 300: | Rotation supporter |
| 106: | Second reinforcing protrusion | 310: | Core member |
| 107: | Skirt | 350: | Core supporter |
| 110: | Fan blade | 360: | Ball joint |
| 111: | First end | | |
| 112: | Second end | | |
| 113: | First edge | | |
| 114: | Second edge | | |
| 120: | Shroud | | |
| 121: | Inlet protrusion | | |
| 130: | Fan base | | |
| 131: | Baseplate | | |
| 132: | Bell mouth | | |
| 133: | Protruding rib | | |
| 134: | Coupling protrusion | | |
| 135: | Second inclined surface | | |
| 140: | Discharger | | |
| 150: | First discharger | | |
| 152: | First discharging core | | |
| 154: | First discharging body | | |
| 156: | Vane | | |
| 160: | Second discharger | | |
| 161: | Second discharging core | | |
| 162: | Second discharging body | | |
| 163: | Discharging supporter | | |
| 170: | Sterilizer | | |

## Claims

1. A mixed flow fan module (70), comprising:
a fan housing (80) having an outer surface that is curved along a circumferential direction and defining an operation space;
a fan member (90) rotatably disposed inside the fan housing (80); and
a fan base (130) coupled to the fan housing (80) and configured to guide air introduction in a direction toward the fan member (90);
wherein the fan housing (80), the fan member (90), and the fan base (130) form a module by coupling to one another.

2. The mixed flow fan module of claim 1, wherein the fan housing (80) comprises:
a supporting plate (81) disposed at a center of the fan housing (80);
a connecting supporter (82) that extends outward from the supporting plate (81) in a radial direction; and
a side supporter (84) that is spaced apart from the supporting plate (81), is connected to the connecting supporter (82), and having a circular curved surface along an outer circumference thereof.

3. The mixed flow fan module of claim 2, wherein the fan housing (80) further comprises an inner guide (85) that protrudes inward from the side supporter (84) and having a first inclined surface (87), and an inner diameter of the first inclined surface (87) is narrowed toward the fan base (130).

4. The mixed flow fan module of any one of claims 1 to 3, wherein the fan member (90) comprises:
a hub (100) disposed at a center of the fan housing (80) and rotating by receiving external power;
a plurality of fan blades (110) having a first end (111) connected to the hub (100) and spaced apart from one another by equal distances along an outer circumferential surface of the hub (100);
a shroud (120) connected to a second end (112) of the fan blade (110), having an annular shape, and spaced apart from the fan base (130); and
wherein an outer diameter of the hub (100) and an inner diameter of the shroud (120) each decrease from an upper side thereof to a lower side thereof.

5. The mixed flow fan module of claim 4, wherein the hub (100) comprises:
a hub plate (101) rotatably disposed inside the fan housing (100) and located at a radial central portion of the fan housing (100);
a shaft coupler (102) disposed at a center of the hub plate (101), that protrudes either upward or downward from the hub plate (101), and is connected to a shaft to receive a rotational power;
an inner protrusion (105) defined along an outer edge of the hub plate (101), having a circular arc shape, and that extends upward; and
a skirt (107) that extends obliquely upward from an outside of the inner protrusion (105).

6. The mixed flow fan module of claim 5, wherein the hub (100) further comprises a first reinforcing protrusion (103) disposed radially around the shaft coupler (102), defined at an outside of the shaft coupler (102), and having a band shape.

7. The mixed flow fan module of claim 5 or 6, wherein the hub (100) further comprises a second reinforcing protrusion (106) that extends in a vertical direction along an inner surface of the inner protrusion (105), wherein a lower portion of the second reinforcing protrusion (106) is curved toward the shaft coupler (102) and is coupled to the hub plate (101) and has a band shape.

8. The mixed flow fan module of claim 6 or 7,
wherein the shroud (120) further comprises an inlet protrusion (121) defined at a lower side of the shroud (120); and
wherein the inlet protrusion (121) has a ring shape, extends downward, and is spaced apart from the fan base (130) by a set distance.

9. The mixed flow fan module of claim 8, wherein the fan base (130) comprises:
a base plate (131) having a plate shape, that extends annularly, and defining a hollow at a central portion thereof to move air;
a bell mouth (132) having an annular shape, disposed along an inner side of the base plate (131) facing the hole, defining a groove concaved upward, and surrounding a lower side of the inlet protrusion (121); and
wherein the fan base (131) further comprises a protruding rib (133) disposed at an outside of the bell mouth (132) in a radial direction, surrounding an outer circumference of the bell mouth (132), and having an annular shape.

10. The mixed flow fan module of claim 9, wherein the protruding rib (133) comprises a second inclined surface (135) that is spaced apart from the shroud (120) and an inner diameter of the second inclined surface (135) is increased toward an upper side thereof.

11. A portable air purifier (1), comprising:
a mixed flow fan module (70) comprising a fan housing (80) having an outer surface that is curved along a circumferential direction and defining an operation space, a fan member (90) rotatably disposed inside the fan housing (80), and a fan base (130) coupled to the fan housing (80) and configured to guide air introduction toward the fan member (90);
a housing (10) defining a cylindrical inner flow path in contact with the fan housing (80) and that extends vertically, configured to accommodate the mixed flow fan module (70), and comprising an inlet (22) defined at a lower portion of the mixed flow fan module (70) and configured to suction air; and
a filter (40) accommodated inside the housing (10), disposed on at least one of a lower surface or an upper surface of the mixed flow fan module (70), and configured to purify air.

12. The portable air purifier of claim 11, wherein the fan housing (80) comprises:
a supporting plate (81) disposed at a central portion of the fan housing (80);
a connecting supporter (82) that extends outward from the supporting plate (81) in a radial direction;
a side supporter (84) that is spaced apart from the supporting plate (81), is connected to the connecting supporter (82), and having a circular curved surface that extends along an outer circumference thereof;
an inner guide (85) that protrudes inward from the side supporter (84) and having a first inclined surface (87), and an inner diameter of the first inclined surface (87) is narrowed toward the fan base (130).

13. The portable air purifier of claim 12, wherein the fan member (90) comprises:
a hub (100) disposed at a center of the fan housing (80) and rotating by receiving external power;
a plurality of fan blades (110) having a first end (111) connected to the hub (100) and spaced apart from one another by equal distances along an outer circumferential surface of the hub (100); and
a shroud (120) connected to a second end (112) of the fan blade (110), having an annular shape, and defining an inlet protrusion (121) that protrudes toward the fan base (130).

14. The portable air purifier of claim 13, wherein the fan base (130) comprises:
a base plate (131) having a plate shape, that extends annularly, and defining a hole at a central portion thereof to move air;
a bell mouth (132) having an annular shape, disposed along an inner side of the base plate (131) facing the hole, defining a groove that is concaved upward, and surrounding a lower side of the inlet protrusion (121); and
a protruding rib (133) disposed at an outside of the bell mouth (132) in a radial direction, surrounding an outer circumference of the bell mouth (132), and having an annular shape.

15. The portable air purifier of claim 14,
wherein the protruding rib (133) comprises a second inclined surface (135) that is spaced apart from the shroud (120) and an inner diameter of the second inclined surface (135) is increased toward an upper side of the second inclined surface (135) and
wherein the first inclined surface (87) and the second inclined surface (135) have a same angle with a horizontal line.

16. A portable air purifier (1), the portable air purifier comprising:
a mixed flow fan module (70) comprising a fan housing (80) having an outer surface that is curved along a circumferential direction and defining an operation space, a fan member (90) rotatably disposed inside of the fan housing (80), and a fan base (130) coupled to the fan housing (80) and configured to guide air toward the fan member (90);
a housing (10) defining an inner flow path in contact with the fan housing (80) and that extends vertically, configured to accommodate the mixed flow fan module (90), and comprising an inlet defined at a lower portion of the mixed flow fan module (70) and through which air is suctioned;
a battery (200) configured to provide power for the mixed flow fan module (70);
a filter (40) accommodated inside of the housing (10), disposed upstream of the mixed flow fan module (70), and configured to purify air; and
a discharger (140) disposed downstream of the mixed flow fan module (70) and configured to discharge purified air.

17. A portable air purifier (70) including the mixed flow fan module (70) of any one of claims 1 to 10.
